# EUROPEAN PATENT APPLICATION

(11) **EP 2 076 034 A1**
(43) Date of publication of application: **01.07.2009**
(21) Application number: 08160985.1
(22) Date of filing: 23.07.2008
(51) Int. Cl.: H04N 5/50, H04N 5/445

(54) **Method for updating broadcast information and broadcast-receiving apparatus using same**

(30) Priority: 27.12.2007 KR 20070138513
(71) Applicant: Samsung Electronics Co., Ltd., Suwon-si, Gyeonggi-Do (KR)
(72) Inventor: Kim, Eung-sun, Gyeonggi-do (KR)
(74) Representative: Grünecker, Kinkeldey, Stockmair & Schwanhäusser Anwaltssozietät

(57) **Abstract**

A method for updating broadcast information and a broadcast receiving apparatus are disclosed. A method for updating broadcast information applied to a broadcast system providing broadcast information regarding a plurality of channels through a subset of the plurality of channels involves tuning to a channel for providing the broadcast information, and updating the pre-stored broadcast information, if it is determined that an operation of tuning to a channel is unnecessary. Therefore, a channel for providing broadcast information is tuned, and the broadcast information is updated at a time when the operation of tuning to a channel is unnecessary, thereby causing minimal viewing disturbance.

## Description

Aspects of the present invention relate to a broadcast information update, and more particularly, to a method for updating information regarding the broadcast which may be received now or in the future, and a broadcast-receiving apparatus using the same.

### 2. Description of the Related Art

Digital broadcasting appeared with the development of video compression techniques and data communication techniques and provides viewers with high definition (HD) broadcasting and with broadcast information related to the high definition broadcasting.

The broadcast information included in a broadcast signal is transmitted to a broadcast-receiving apparatus, and is finally provided to viewers. Recently, the number of broadcast channels available has increased significantly, and the amount of broadcast information has increased proportionally.

The broadcast-receiving apparatus needs to retain the broadcast information in order to provide such information at the time at which a viewer desires to receive the broadcast information. Furthermore, as the broadcast information varies in real time, the broadcast information must be constantly updated.

The increase of broadcast information also causes the time required to update the broadcast information to increase. While the broadcast information is being updated, the broadcast-receiving apparatus cannot provide viewers with broadcasting desired by the viewers. Therefore, the increase in the update time hinders viewers from viewing the broadcasting.

It is the object of the present invention to provide a method for updating broadcast information and a broadcast-receiving apparatus thereof, which tunes to a channel providing broadcast information at a time when it is unnecessary for a channel to be tuned in order to collect the newest broadcast information without hindering users from viewing the broadcasting, in a broadcast system for providing broadcast information regarding all channels available through some of the channels.

This object is solved by the subject matter of the independent claims.

Preferred embodiments are defined in the dependent claims.

Additional aspects and/or advantages of the invention will be set forth in part in the description which follows, and in part, will be obvious from the description, or may be learned by practice of the invention.

According to an aspect of the present invention, there is provided a method for updating broadcast information in a broadcast system providing broadcast information regarding a plurality of channels through a subset of the plurality of channels, the method including determining whether an operation of tuning to a channel is necessary; tuning to a channel for providing the broadcast information, if it is determined that the operation of tuning to a channel is unnecessary in the determining step; and updating pre-stored broadcast information using the broadcast information received through the channel tuned in the tuning step.

The broadcast information may include broadcast information regarding channels for providing the broadcast information and broadcast information regarding channels other than the channels for providing the broadcast information.

The operation of tuning to a channel may be determined to be unnecessary if: i ) a menu screen is output, ii) an electronic program guide (EPG) screen is output, iii) a video stored in a storage medium is output, or iv) a video is received from an external device.

The tuning may further include acquiring information regarding a channel for providing the broadcast information, if it is determined that the operation of tuning to a channel is unnecessary in the determining step; and tuning to a channel for providing the broadcast information based on the information acquired in the acquiring step.

The channel for providing the broadcast information may be an event information table (EIT) barker channel, and the broadcast information may be an EIT schedule.

The information regarding the channel for providing the broadcast information may be acquired from one of the storage medium in which the information is stored, and a broadcast signal which is received through a currently tuned channel.

The channel for providing the broadcast information may be an event information table (EIT) barker channel, the broadcast information may be an EIT schedule, and the information regarding the channel for providing the broadcast information may be acquired from the EIT barker included in the broadcast signal which is received through the currently tuned channel.

The updating may further include parsing the broadcast information from the broadcast signal received through the channel tuned in the tuning step; and updating the pre-stored broadcast information using the broadcast information parsed in the parsing step.

The tuning may further include storing information on a final operating state of a reception element for carrying out the operation, if it is determined that the operation of tuning to a channel is unnecessary in the determining step; and tuning to a channel for providing the broadcast information using the reception element, and wherein the method may include setting the reception element to be the information on the final operating state stored in the storing state, if the updating is completed or the operation of tuning a channel is necessary.

According to another aspect of the present invention, there is provided a broadcast-receiving apparatus used for a broadcast system providing broadcast information regarding a plurality of channels through a subset of the plurality of channels, the broadcast-receiving apparatus including a reception unit to tune to a channel; a storage unit to store the broadcast information; and a control unit to control the reception unit to tune to a channel for providing the broadcast information, and to update the broadcast information stored in the storage unit using broadcast information received through the channel tuned by the reception unit, if it is determined that an operation of the reception unit tuning to a channel is unnecessary.

The broadcast information may include broadcast information regarding channels for providing the broadcast information and broadcast information regarding channels other than the channels for providing the broadcast information.

The operation of tuning to a channel may be determined to be unnecessary if: i ) a menu screen is output, ii) an electronic program guide (EPG) screen is output, iii) a video stored in a storage medium is output, or iv) a video is received from an external device.

If it is determined that the operation of tuning to a channel is unnecessary, the control unit may acquire information regarding a channel for providing the broadcast information, and controls the reception unit to tune to a channel for providing the broadcast information based on the acquired information.

The channel for providing the broadcast information may be an event information table (EIT) barker channel, and the broadcast information may be an EIT schedule.

The information regarding the channel for providing the broadcast information may be acquired from one of broadcast signals received through the channel tuned by the storage unit and broadcast signals received from the reception unit.

The channel for providing the broadcast information may be an event information table (EIT) barker channel, the broadcast information may be an EIT schedule, and the information regarding the channel for providing the broadcast information may be acquired from the EIT barker included in the broadcast signal which is received through the currently tuned channel.

The control unit may parse the broadcast information from the broadcast signal received over the channel tuned by the reception unit, and update the broadcast information pre-stored in the storage unit using the parsed broadcast information.

If it is determined that the operation of tuning to a channel is unnecessary, the control unit may store information on the final operating state of the reception unit in the storage unit, and if the broadcast information is completely updated, or the operation of tuning to a channel is necessary, the control unit may set the reception unit to the final operating state about which is information is stored in the storage unit.

In addition to the example embodiments and aspects as described above, further aspects and embodiments will be apparent by reference to the drawings and by study of the following descriptions.

These and/or other aspects and advantages of the invention will become apparent and more readily appreciated from the following description of the embodiments, taken in conjunction with the accompanying drawings of which:
FIG. 1 is a block diagram illustrating a set-top box (STB) applicable to an exemplary embodiment of the present invention; and
FIG. 2 is a flowchart illustrating a method for updating an event information table (EIT) schedule according to an exemplary embodiment of the present invention.

Reference will now be made in detail to the exemplary embodiments of the present invention, examples of which are illustrated in the accompanying drawings, wherein like reference numerals refer to like elements throughout. The embodiments are described below, in order to explain the present invention by referring to the figures.

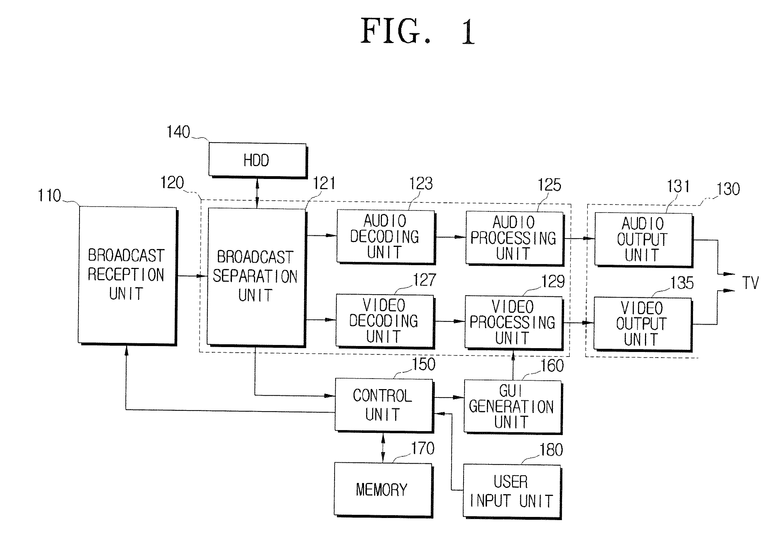

FIG. 1 is a block diagram illustrating a set-top box (STB) applicable to an exemplary embodiment of the present invention. The STB of FIG. 1 is used in a broadcast system, which provides broadcast information regarding all channels available through a subset of the channels. NorDig, used for digital video broadcasting (DVB), is provided as one example of such a broadcast system.

In this broadcast system, the number of channels forming the subset of channels is not limited. That is, the subset of channels may comprise one or more channels. For example, if one hundred channels are provided, the broadcast information regarding all one hundred channels may be provided through one channel. Broadcast information regarding not only that one channel, but also the broadcast information regarding the other ninety-nine channels, is provided. In other words, the broadcast information provided over one channel includes not only the broadcast information regarding that one channel but also the broadcast information regarding the other ninety-nine channels.

The channel for providing broadcast information is referred to as an event information table (EIT) barker channel, and the broadcast information is referred to as an EIT schedule. A broadcast signal provided over a channel not providing broadcast information includes an EIT barker. The EIT barker contains information regarding the EIT barker channel providing broadcast information.

Referring to FIG. 1, a set-top box (STB) according to an exemplary embodiment of the present invention may comprise a broadcast reception unit 110, a broadcast processing unit 120, a broadcast output unit 130, a hard disc drive (HDD) 140, a control unit 150, a graphical user interface (GUI) generation unit 160, a memory 170, and a user input unit 180.

The broadcast reception unit 110 tunes to broadcasting received either through the air or by wired or wireless cable, and demodulates the tuned broadcasting. The broadcasting received by the broadcast reception unit 110 may be terrestrial broadcasting, cable broadcasting, or satellite broadcasting. That is, the types of broadcasting received by the broadcast reception unit 110 should not be considered to be limited. The broadcast reception unit 110 comprises a tuner to tune to broadcasting desired by a user.

The broadcast processing unit 120 processes a broadcast signal output from the broadcast reception unit 110, and may comprise a broadcast separation unit 121, an audio decoding unit 123, an audio processing unit 125, a video decoding unit 127, and a video processing unit 129.

The broadcast separation unit 121 separates a broadcast signal output from the broadcast reception unit 110 into an audio signal, a video signal, and additional data, and outputs the separated signals and data. The audio signal and video signal separated from the broadcast signal are transmitted to the audio decoding unit 123 and the video decoding unit 127, respectively, and are used to provide a broadcast program.

The additional data contain an EIT schedule or EIT barker. Specifically, the additional data regarding broadcast signals provided over an EIT barker channel include an EIT schedule, and the additional data regarding broadcast signals provided over the other channels, that is, the channels excluding the EIT barker channel, include an EIT barker. The EIT barker contains information regarding the EIT barker channel, which provides broadcast information.

Additional data are stored in the memory 170 under the control of the control unit 150, and processed by the control unit 150. The control unit 150 controls the memory 170 to store an EIT schedule and information regarding an EIT barker channel.

The audio decoding unit 123 decodes an audio signal output from the broadcast separation unit 121. Accordingly, the audio decoding unit 123 outputs a decompressed audio signal.

The audio processing unit 125 converts a decoded audio signal into an audio signal which is capable of being transmitted to a television (TV) connected to the STB. The audio processing unit 125 carries out digital-to-analog (D/A) conversion on the audio signal.

The video decoding unit 127 decodes a video signal output from the broadcast separation unit 121. Accordingly, the video decoding unit 127 outputs a decompressed video signal.

The video processing unit 129 processes the decoded video signal output from the video decoding unit 127.

The GUI generation unit 160 generates a GUI to be displayed on the screen of a TV connected to the STB. The GUI generated by the GUI generation unit 160 is a form of display information which is displayed as an interface between a user and the STB, and includes a means of receiving a user command such as a menu screen and electronic program guide (EPG) screen, and a means of providing information on the operating state of the STB.

The GUI generated by the GUI generation unit 160 is transmitted to the video processing unit 129, and displays the transmitted GUI together with a video output from the video decoding unit 127.

The broadcast output unit 130 may comprise an audio output unit 131 and video output unit 135 to transmit an audio signal and video signal output from the broadcast processing unit 120 to the TV connected therewith. A display and speaker provided on the TV output the video and audio received from the STB, respectively.

The HDD 140 is a memory device to store broadcasting received by the broadcast reception unit 110 and the broadcast separation unit 121. The broadcasting stored in the HDD 140 may be played back by passing through the broadcast processing unit 120.

The memory 170 stores data and programs to control the operation of the STB. As described above, the memory 170 stores information regarding the EIT barker channel and EIT schedule.

The user input unit 180 transmits a user command input through buttons on the STB or remote control to the control unit 150, and the control unit 150 controls the overall operation of the STB according to a user command transmitted from the user input unit 180.

The control unit 150 controls the broadcast reception unit 110 to receive the broadcasting provided over the channel selected by a user.

The control unit 150 generates an EPG screen using the EIT schedule stored in the memory 170, and updates the EIT schedule to have the most recent information.

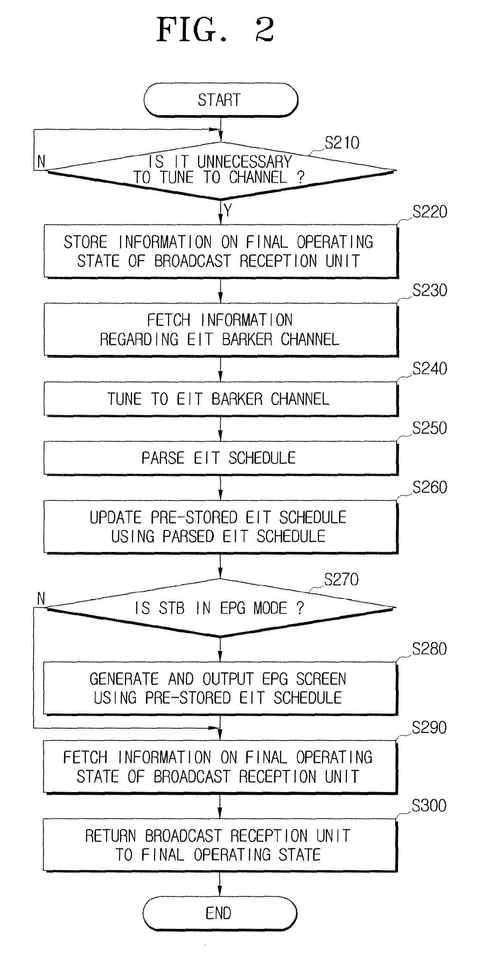

The process by which the control unit 150 updates an EIT schedule will be explained in detail with reference to FIG. 2. FIG. 2 is a flowchart illustrating a method for updating an EIT schedule according to an exemplary embodiment of the present invention.

Referring to FIG. 2, the control unit 150 determines if it is necessary or unnecessary for the broadcast reception unit 110 to tune to a channel (S210). When the currently broadcast video should not be provided to a user, it is unnecessary for the broadcast reception unit 110 tune to a channel.

For example, when a user requests a menu screen or EPG screen, and the screens should be output, it is unnecessary for the broadcast reception unit 110 to tune to a channel.

When the broadcasting stored in the HDD 140 is output, or the video input from an external device connected through an external input terminal (not shown) is processed and output, it is also unnecessary for the broadcast reception unit 110 to tune to a channel.

If it is determined that the operation of tuning a channel is unnecessary in operation S210 (S210-Y), the control unit 150 stores information on the final operating state of the broadcast reception unit 110 in the memory 170. The information on the final operating state of the broadcast reception unit 110 includes information regarding a channel to which the broadcast reception unit 100 is finally tuned.

The control unit 150 fetches the information regarding the EIT barker channel from the memory 170 (S230). The control unit 150 controls the broadcast reception unit 110 to tune to the EIT barker channel about which information is obtained in operation S230 (S240).

The broadcast reception unit 110 receives a broadcast signal provided from the EIT barker channel. The additional data of the broadcast signal provided by the EIT barker channel contain an EIT schedule as described above.

The control unit 150 parses the EIT schedule from the additional data of the broadcast signal which is provided by the EIT barker channel, and which passes through the broadcast reception unit 110 and the broadcast separation unit 121 (S250).

The control unit 150 updates the EIT schedule pre-stored in the memory 170 using the EIT schedule parsed in operation S250 (S260).

If the STB is in an EPG mode (S270-Y), the control unit 150 generates an EPG screen using the EIT schedule pre-stored in the memory 170, and controls the GUI generation unit 160 to output the EPG screen through the TV (S280).

In the EPG mode, a user requests an EPG screen, and the EPG screen is output instead of a broadcast screen provided over a channel tuned by the broadcast reception unit 110.

If the STB is not in an EPG mode (S270-N), operation S280 is not executed.

The control unit 150 fetches the information on the final operating state of the broadcast reception unit 110 (S290), and controls the broadcast reception unit 110 to return to the final operating state based on the fetched information (S300).

The process of updating an EIT schedule is described in detail with an exemplary embodiment of the present invention.

The EIT schedule is disclosed merely as an exemplary embodiment of broadcast information. The present invention may be applied to broadcast information other than the EIT schedule.

Although the EIT barker channel is disclosed to designate a channel for providing broadcast information, the present invention may also be applied to any other channels for providing broadcast information.

In the exemplary embodiment of the present invention, the control unit 150 uses the EIT channel information stored in the memory 170 to tune to an EIT barker channel. That is, the control unit 150 obtains the EIT barker channel from the EIT barker channel information stored in the memory 170. However, this is merely an exemplary embodiment of the present invention, and the present invention may be implemented using other means. For example, the present invention may be embodied to obtain the EIT barker channel from the EIT barker included in the additional data of the broadcast signal received by the broadcast reception unit 110.

According to the exemplary embodiment of the present invention, after an EIT schedule is completely updated, the broadcast reception unit 110 returns to the final operating state. Alternatively, the broadcast reception unit 110 may return to the final operating state in other situations. For example, when a user requests a broadcast screen, the operation of tuning a channel is required.

While the present invention is applied to NorDig, the present invention may be applicable to any other broadcast systems capable of providing broadcast information regarding all available channels through a subset of the channels.

According to the exemplary embodiment of the present invention, the STB is provided as a broadcast-receiving apparatus, but this should not be considered to be limiting. The present invention may also be applied to broadcast-receiving apparatuses such as a TV, and various mobile apparatuses such as a portable TV, mobile phone, personal multimedia player (PMP), navigation device, or MPEG-3 (MP3) player having a broadcast reception function.

As described above, according to the exemplary embodiments of the present invention, a channel for providing broadcast information is tuned, and broadcast information is updated, when the operation of tuning a channel is unnecessary in a broadcast system for providing broadcast information regarding all available channels through a subset of the channels. Therefore, a broadcast-receiving apparatus having such functions causes minimal viewing disturbance when the broadcast information is updated.

Although a few embodiments of the present invention have been shown and described, it would be appreciated by those skilled in the art that changes may be made in this embodiment without departing from the scope of the invention, as defined in the claims.

## Claims

1. A method for updating broadcast information in a broadcast system providing broadcast information regarding a plurality of channels through a subset of the plurality of channels, the method comprising:
determining whether an operation of tuning to a channel is necessary;
tuning to a channel for providing the broadcast information, if it is determined that the operation of tuning to a channel is unnecessary in the determining step; and
updating pre-stored broadcast information using the broadcast information received through the channel tuned in the tuning step.

2. The method according to claim 1, wherein the broadcast information comprises broadcast information regarding channels for providing the broadcast information and broadcast information regarding channels other than the channels for providing the broadcast information.

3. The method according to claim 1 or 2, wherein the operation of tuning to a channel is determined to be unnecessary if:
i) a menu screen is output,
ii) an electronic program guide, EPG, screen is output,
iii) a video stored in a storage medium is output, or
iv) a video is received from an external device.

4. The method according to claim 1 or 2, wherein the tuning further comprises:
acquiring information regarding a channel for providing the broadcast information, if it is determined that the operation of tuning to a channel is unnecessary in the determining step; and
tuning to a channel for providing the broadcast information based on the information acquired in the acquiring step.

5. The method according to claim 4, wherein the channel for providing the broadcast information is an event information table, EIT, barker channel, and the broadcast information is an EIT schedule.

6. The method according to claim 4, wherein the information regarding the channel for providing the broadcast information is acquired from one of the storage medium in which the information is stored, and a broadcast signal which is received through a currently tuned channel.

7. The method according to claim 6, wherein the channel for providing the broadcast information is an event information table, EIT, barker channel, the broadcast information is an EIT schedule, and the information regarding the channel for providing the broadcast information is acquired from the EIT barker included in the broadcast signal which is received through the currently tuned channel.

8. The method according to one of claims 1 to 7, wherein the updating further comprises:
parsing the broadcast information from the broadcast signal received through the channel tuned in the tuning step; and
updating the pre-stored broadcast information using the broadcast information parsed in the parsing step.

9. The method according to claim 1 or 2, wherein the tuning further comprises:
storing information on a final operating state of a reception element for carrying out the operation, if it is determined that the operation of tuning to a channel is unnecessary in the determining step; and
tuning to a channel for providing the broadcast information using the reception element, and wherein
the method comprises:
setting the reception element to be the information on the final operating state stored in the storing state, if the updating is completed or the operation of tuning a channel is necessary.

10. A broadcast-receiving apparatus used for a broadcast system providing broadcast information regarding a plurality of channels through a subset of the plurality of channels, the broadcast-receiving apparatus comprising:
a reception unit to tune to a channel;
a storage unit to store the broadcast information; and
a control unit to control the reception unit to tune to a channel for providing the broadcast information, and to update the broadcast information stored in the storage unit using broadcast information received through the channel tuned by the reception unit, if it is determined that an operation of the reception unit tuning to a channel is unnecessary.

11. The apparatus according to claim 10, having means to operate according to one of the method claims 1 to 9.

12. The apparatus according to claim 10 or 11, wherein if it is determined that the operation of tuning to a channel is unnecessary, the control unit is adapted to acquire information regarding a channel for providing the broadcast information, and to control the reception unit to tune to a channel for providing the broadcast information based on the acquired information.

13. The apparatus according to claim 12, wherein the information regarding the channel for providing the broadcast information is acquired from one of broadcast signals received through the channel tuned by the storage unit and broadcast signals received from the reception unit.

14. The apparatus according to claim 10, wherein the control unit is adapted to parse the broadcast information from the broadcast signal received over the channel tuned by the reception unit, and to update the broadcast information pre-stored in the storage unit using the parsed broadcast information.

15. The apparatus according to claim 10, wherein if it is determined that the operation of tuning to a channel is unnecessary, the control unit is adapted to store information on the final operating state of the reception unit in the storage unit, and if the broadcast information is completely updated, or the operation of tuning to a channel is necessary, the control unit is further adapted to set the reception unit to the final operating state about which is information is stored in the storage unit.
